# EUROPEAN PATENT SPECIFICATION

(11) **EP 2 508 792 B1**
(45) Date of publication and mention of the grant of the patent: **16.04.2014**
(21) Application number: 10425327.3
(22) Date of filing: 08.10.2010
(51) Int. Cl.: F21S 8/08, F21S 9/03, F21V 21/10, F21V 21/36, F21W 131/103, F21V 7/00, F21V 19/04

(54) **Street light having a hollow pole**
Straßenlampe mit einer hohlen Stange
Lampadaire de rue doté d'un poteau creux

(43) Date of publication of application: 10.10.2012
(73) Proprietor: Quinzi, Gianni, 05010 San Venanzo (TR) (IT); Chiacchieroni, Alfredo, 05010 San Venanzo (TR) (IT); MECCANICA di PRECISIONE di GIACOMINI ACHILLE & C. Srl., 60044 Fabriano (AN) (IT)
(72) Inventor: Chiacchieroni, Alfredo, 05010 San Venanzo (TR) (IT)
(74) Representative: Cioncoloni, Giuliana

(56) References cited:
- WO-A1-2008/125711
- DE-U1- 20 120 155
- FR-A1- 2 908 861
- GB-A- 2 408 395
- US-A- 4 242 726

## Description

The present invention relates to a street light having a hollow pole.

The patent invention FR 2908861 discloses an internally hollow pole for the passage of a feeding wiring and having light external zones, particularly at the height of a person, alternating to passive zones that are partially covered with photovoltaic panels.

The international patent application WO 2008/125711 discloses a street light on the pole of which photovoltaic panels are arranged. In this way a cantilever effect due to the wind is prevented, effect that would occur if normal photovoltaic panels were used.

The patent application GB 2 408 395 discloses a street light pole having a hatch for putting electric components and batteries inside it. The pole is lined in an upper section thereof by photovoltaic panels picking up the sun energy and transforming it into electric energy. DE 201 20 155 U discloses a street light comprising all the features of the preamble of claim 1.

No above cited document discloses a street light so made that it comprises, inside its pole, means adapted to recover energy from the emission of lamp artificial light.

An object of the present invention is to optimise as much as possible a street light system with respect to the environmental impact.

Another object of the invention is to manufacture a street light that gives energy saving in the system, in particular by using the energy obtained by the transformation of the same light artificial energy of the lamp of the street light.

Yet another object of the invention is to manufacture an easily made street light.

Further an object of the invention is to manufacture a street light that permits an easy replacement of the lamp.

The objects are achieved by a street light having a hollow pole as defined in claim 1 and in the depending claims thereof.

The invention will be better understood by means of the detailed following description of an embodiment thereof, referring to the enclosed drawing, in which:
Figures 1 to 3 are diagrammatic front, side and rear views respectively, of a street light according to the present invention;
Figure 4 is an enlarged diagrammatic fragmentary longitudinal cross section of a pole of the street light in Figures 1 to 3 inside which there are lamp positioning means, in a side view; and
Figures 5 and 6 are diagrammatic front and side views of the lamp positioning means.

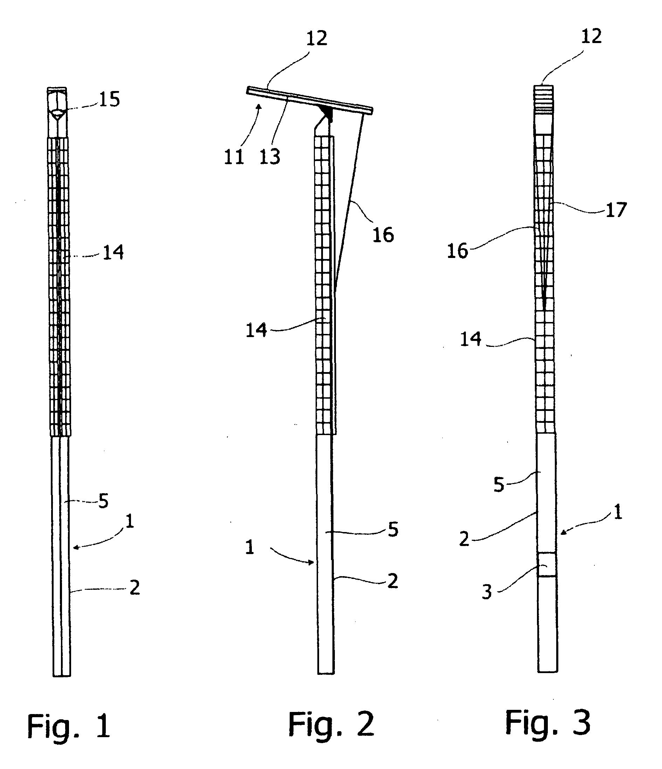

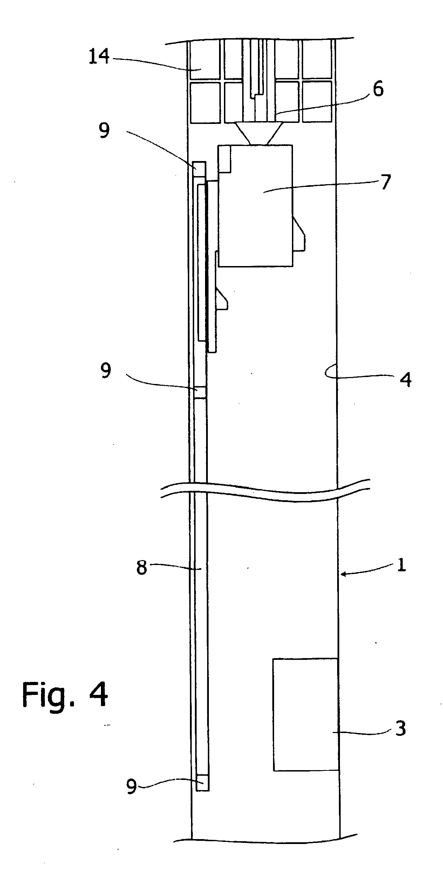

First referring to Figures 1 to 3, there is shown a street light according to the invention in a front, side and rear respectively view thereof. The street light is generally comprised of a hollow pole 1, having a triangular shape; the pole can be of any other cross section shape. In the figures there is shown a lower section 2 of the hollow pole 1, in which a hand access lower opening closed by a hatch 3 is formed. The hollow pole 1 has an internal surface 4 and an external surface 5. The internal surface 4 is shown in Figure 4, that is a diagrammatic fragmentary longitudinal cross section of a pole of the street light according to the invention.

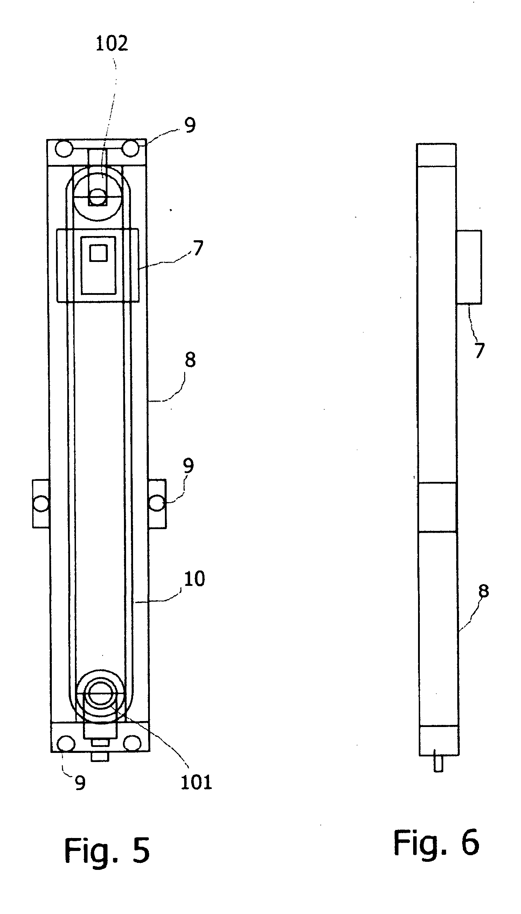

Inside the hollow pole 1 there are positioning means of a lamp 6 sustained by a lamp holder 7. The lamp holder 7 can slide on a rail 8 that is fixed to the hollow pole 1 by means of fastening points generally indicated as 9. The rail 8 is shown in more detail in Figures 5 and 6 that are front and side views of the lamp positioning means. These lamp positioning means comprises, as associated to the rail 8 for the lamp holder sliding, a flexible connecting member, such as a chain 10 or a belt sliding on the rail. The chain 10 is mounted on a pair of lower and upper wheels or rollers 101, 102. In this way the lamp 6, that is positioned in the lamp holder 7, which is arranged on the chain 10, in the hand access opening inside the hollow pole, can be moved until near the upper end of the hollow pole 1. The movement of the chain 10 can be performed manually by means of a crank being connected to the wheel 10 1; alternatively, the wheel 101 can be driven by a motor being fed by a battery (not shown).

Turning to Figures 1 to 3, in particular to Figure 2, on the upper end of the hollow pole 1, that is open, a tiltable screen 11 is mounted having a side facing upward, which is covered by photovoltaic cells 12, and an opposite side, i.e. facing downward, which is lined by a reflecting panel 13.

As shown in Figure 4, the internal surface of the hollow pole 1, facing the lamp 6, is covered by internal photovoltaic cells 14.

On the upper end of the hollow pole 1, under the screen 11, lenses 15 (Figure 1) are provided that focus the light as desired for magnifying and reducing the light beam. The tiltable screen 11 is hinged on the upper end of the pole and its inclination is adjustable from the bottom by tie rods 16, 17.

Further external photovoltaic cells 14, that are able to pick up solar energy and transform it into electric energy, are provided from a determined height on the external surface of the hollow pole 1.

Even if not shown, the street light pole is internally provided with a system having an inverter to put on in the mains energy given by the sun and the lamp through the external and internal photovoltaic cells.

For the operation, the lamp 6, after being inserted inside the hollow pole 1 and fastened to the chain 10 through the lamp holder 7 is moved until near the upper end of the hollow pole 1 by moving the chain 10 by means of the crank or the motor. At the upper end of the hollow pole 1, the lamp 6 lights the screen 11 through the upper opening of the hollow pole 1. The rays of the lamp 6 are reflected by the reflecting panel 13 on the lower side of the screen 11. The lenses 15 serve to magnify or reduce the light beam. At the same time, the lamp 6 lights the internal photovoltaic cells 14 that feed the mains through the inverter by transforming the artificial light of the lamp 6. When the lamp is switched off, the external photovoltaic cells 14 and the photovoltaic cells 12 on the screen 11 are hit by the sun rays and feed through the inverter the mains by transforming the solar energy.

## Claims

1. A street light having a hollow pole being provided with a lower hand-access opening closed by a hatch (3), the hollow pole (1) having an internal surface and an external surface, its external surface being lined by external photovoltaic cells (14) in an upper section thereof, and a lamp (6) that is positioned inside the hollow pole (1), **characterised in that** the upper end of the hollow pole (1) is open and the lamp (6) is mounted on positioning means so that the lamp can be moved, inside the hollow pole (1), from the lower hand-access opening until near the upper end of the hollow pole (1) on which a tiltable screen (11) is mounted having a side facing upward and a side facing downward, the latter being lined by a reflecting panel (13), the internal surface of the hollow pole (1) being covered by internal photovoltaic cells (14).

2. The street light according to claim 1, **characterised in that** the means positioning the lamp (6) comprises an endless flexible connecting member (10) riding on transmission elements, connecting member on which a lamp holder (7) with a lamp (6) is fixed.

3. The street light according to claim 2, **characterised in that** guiding means co-operates with the lamp positioning means in order to guide the lamp from the lower hand-access opening until near the upper end of the hollow pole (1).

4. The street light according to claim 1, **characterised in that** the tiltable screen (11) is provided on its side facing downward with at least a lens (15) for magnifying and reducing a light beam.

5. The street light according to claim 1, **characterised in that** the tiltable screen (11) is hinged to the upper end of the hollow pole (1) and the inclination of the tiltable screen can be adjusted by tie rods (16), the tiltable screen (11) being lined on its upper side by photovoltaic cells (12) and on its lower side by a reflecting panel (13).

6. The street light according to claim 1, **characterised in that** further the hollow pole (1) is internally provided with a system having an inverter to put on in the mains energy given by the sun and the lamp (6) through the external and internal photovoltaic cells (14).

## Patentansprüche

1. Eine Straßenlampe mit einem hohlen Leitungsmasts, der ausgestattet ist mit einer unteren Handzugangsöffnung, die mit einer Luke (3) verschlossen ist. Der hohle Leitungsmast (1) verfügt über eine innere und eine äußere Oberfläche. Seine äußere Oberfläche ist in ihrem oberen Bereich mit externen Photovoltaikzellen (14) bedeckt und einer Lampe (6), die innerhalb des hohlen Leitungsmasts positioniert ist (1). **Dadurch gekennzeichnet, dass** das obere Ende des hohlen Leistungsmasts (1) offen ist und die Lampe (6) an einem Positioniermittel angebracht ist, sodass die Lampe innerhalb des hohlen Leitungsmasts (1) von der unteren Handzugangsöffnung bis nahe an das obere Ende des hohlen Leitungsmasts (1), an dem der kippbare Schirm (11) mit einer nach oben zeigenden Seite und einer nach unten zeigenden Seite angebracht ist, bewegt werden kann. Letztere ist mit einem reflektierenden Panel (13) verkleidet, die innere Oberfläche des hohlen Leitungsmasts (1) ist mit internen Photovoltaikzellen (14) bedeckt.

2. Die Straßenlampe nach Anspruch 1, **dadurch gekennzeichnet,**
**dass** das Mittel zur Positionierung der Lampe (6) ein endloses flexibles Verbindungselement (10 umfasst, das auf Übertragungselementen läuft, ein Verbindungselement, an dem ein Lampenhalter (7) mit einer Lampe (6) befestigt ist.

3. Die Straßenlampe nach Anspruch 2, **dadurch gekennzeichnet,**
**dass** das Führungsmittel der Lampe mit dem Positioniermittel zusammenwirkt, um die Lampe von der unteren Handzugangsöffnung bis nahe an das obere Ende des hohlen Leitungsmasts (1) zu führen.

4. Die Straßenlampe nach Anspruch 1, **dadurch gekennzeichnet,**
**dass** der kippbare Schirm (11) auf der nach unten zeigenden Seite mit mindestens einer Linse (15) zum Vergrößern und Verkleinern des Lichtstrahls ausgestattet ist.

5. Die Straßenlampe nach Anspruch 1, **dadurch gekennzeichnet,**
**dass** der kippbare Schirm (11) am oberen Ende des hohlen Leitungsmasts (1) um ein Scharnier drehbar befestigt ist und der Neigungswinkel des kippbaren Schirms durch Zugstangen (16) eingestellt werden kann, dass der kippbare Schirm (11) auf der Oberseite mit den Photovoltaikzellen (12) und auf der Unterseite mit dem reflektierenden Panel (13) verkleidet ist.

6. Die Straßenlampe nach Anspruch 1, **dadurch gekennzeichnet,**
**dass** der hohle Leitungsmast (1) darüber hinaus innen mit einem System ausgestattet ist, das einen Frequenzumrichter besitzt, um die von der Sonne und der Lampe (6) gespendete Energie über die externen und internen Photovoltaikzellen (14) in ein Verteilungsnetz zu leiten.

## Revendications

1. Réverbère avec mât creux pourvu d'une ouverture inférieure d'accès manuel fermée par une trappe de visite (3), le mât creux (1) ayant une surface interne et une surface externe, sa surface externe étant revêtue de cellules photovoltaïques externes (14) en sa partie supérieure, et une lampe (6) positionnée à l'intérieur du mât creux (1), **caractérisé en ce que** l'extrémité supérieure du mât creux (1) est ouverte et que la lampe (6) est montée sur un moyen de positionnement de manière à ce que la lampe puisse être déplacée, à l'intérieur du mât creux (1), de l'ouverture inférieure d'accès manuel jusqu'à proximité de l'extrémité supérieure du mât creux (1) sur laquelle est monté un écran inclinable (11) dont un côté regarde vers le haut et un côté regarde vers le bas, ce dernier étant revêtu d'un panneau réfléchissant (13), avec la surface interne du mât creux (1) recouverte de cellules photovoltaïques internes (14).

2. Réverbère selon la revendication 1, **caractérisé en ce que** le moyen de positionnement de la lampe (6) se compose d'une pièce de jonction flexible sans fin (10) coulissant sur des éléments de transmission, une douille de lampe (7) avec une lampe (6) étant fixées sur ladite pièce de jonction.

3. Réverbère selon la revendication 2, **caractérisé en ce que** le moyen de guidage coopère avec le moyen de positionnement de la lampe pour guider la lampe de l'ouverture inférieure d'accès manuel jusqu'à proximité de l'extrémité supérieure du mât creux (1).

4. Réverbère selon la revendication 1, **caractérisé en ce que** l'écran inclinable (11) est muni sur sont côté regardant vers le bas d'au moins une lentille (15) d'agrandissement et de réduction du faisceau lumineux.

5. Réverbère selon la revendication 1, **caractérisé en ce que** l'écran inclinable (11) est fixé sur charnières à l'extrémité supérieure du mât creux (1) et que l'inclinaison de l'écran inclinable peut être réglée par des tirants (16), l'écran inclinable (11) étant revêtu sur son côté supérieur de cellules photovoltaïques (12) et sur son côté inférieur d'un panneau réfléchissant (13).

6. Réverbère selon la revendication 1, **caractérisé en ce que** le mât creux (1) est pourvu en outre à son intérieur d'un système avec onduleur pour injecter dans un réseau de distribution électrique l'énergie donnée par le soleil et la lampe (6) à travers les cellules photovoltaïques externes et internes (14).
